# EUROPEAN PATENT APPLICATION

(11) **EP 2 475 085 A1**
(43) Date of publication of application: **11.07.2012**
(21) Application number: 10811685.6
(22) Date of filing: 09.08.2010
(51) Int. Cl.: H02M 3/155, H02M 3/00

(54) **POWER CONVERSION DEVICE**

(30) Priority: 31.08.2009 JP 2009200573; 16.10.2009 JP 2009239181; 02.08.2010 JP 2010173564
(71) Applicant: Sumitomo Electric Industries, Ltd., Chuo-ku Osaka-shi Osaka 540-0041 (JP)
(72) Inventor: NII, Kazuhiko, Osaka-shi Osaka 554-0024 (JP); ARIYOSHI, Takeshi, Osaka-shi Osaka 554-0024 (JP); HIROTA, Masayoshi, Osaka-shi Osaka 554-0024 (JP); BABA, Takeshi, Osaka-shi Osaka 554-0024 (JP)
(74) Representative: Cross, Rupert Edward Blount
(86) International application number: PCT/JP2010/063492
(87) International publication number: WO 2011/024635

(57) **Abstract**

There is provided a power conversion device having no limitation on a voltage on each of an input side and an output side, being compact, and involving a low loss.

The power conversion device is **characterized by** including: a rectifying unit 10 that rectifies an alternating current; a voltage step-up/step-down unit 20 that includes an element 23 for correcting a power factor, and that steps up or down a DC voltage from the rectifying unit; a central capacitor 15 that is charged by the DC voltage and discharges the voltage to an output section at a rear stage; a first front-stage switching element 11 and a second front-stage switching element 12 serially arranged between the voltage step-up/step-down unit and the central capacitor; a first rear-stage switching element 16 and a second rear-stage switching element 17 serially arranged between the central capacitor and the output section; and a control unit that controls the foregoing constituents.

## Description

### TECHNICAL FIELD

The present invention relates to a power conversion device, e.g., a power conversion device that is used for charging a battery of an electric vehicle (EV), a plug-in hybrid vehicle (HV), and the like using general household AC power.

### BACKGROUND ART

In the EV or the plug-in HV, a drive-purpose main battery is charged using general household power. In this case, a device that converts the general household AC power into DC power is necessary. For example, various switching power supply devices that convert AC power into DC power have been proposed, though they are not intended to charge the main battery of the EV or the like (Patent Literatures 1 to 3).

According to such a switching power supply device, the alternating current is subjected to full wave rectification, and guided to a capacitor. At the front stage relative to the capacitor, paired front-stage switching elements are arranged, and at the rear stage, paired rear-stage switching elements are arranged. By the paired front-stage switching elements and the paired rear-stage switching elements being alternately turned ON and OFF, the capacitor is alternately charged and discharged. That is, in a state where the front-stage switching elements are ON and the rear-stage switching elements are OFF, the capacitor is charged by a voltage having undergone the full wave rectification. On the other hand, in a state where the front-stage switching elements are OFF and the rear-stage switching elements are ON, by the charged capacitor being discharged, the power is output to the rear stage. Such a manner of output can be referred to as a batch power-relay method.

Thus, without the necessity of using a transformer, miniaturization can be realized. Further, since a loss due to a transformer does not occur even when the ON/OFF operation is performed at high frequencies, DC power can be supplied efficiently. Moreover, through the batch power-relay method, the AC input side and the DC power supply side (load side) can be insulated from each other.

What is also proposed is a DC/DC converter that receives DC power and outputs DC power (Patent Literature 4). This can also realize miniaturization and reduction in both the weight and the loss, through the above-described batch power-relay method which does not involve use of a transformer.
However, with the above-described switching power supply device and the DC/DC converter, it is required that the voltage on the output side is lower than the input voltage. Under this condition, the main battery of an EV or the like cannot be charged using a general household AC power supply.

### CITATION LIST

### PATENT LITERATURE

Patent Literature 1: Unexamined Japanese Patent Publication No. 2008-079425
Patent Literature 2: Unexamined Japanese Patent Publication No. 2008-079426
Patent Literature 3: Unexamined Japanese Patent Publication No. 2008-079427
Patent Literature 4: Unexamined Japanese Patent Publication No. 2004-222379

### SUMMARY OF INVENTION

An object of the present invention is to provide a power conversion device which is free of any limitation on a voltage on each of an input side and on an output side, and which is small in size and whose loss is small.

(1) A power conversion device of the present invention mutually converts AC power and DC power. The power conversion device is characterized in including: a rectifying unit that rectifies an alternating current; a voltage step-up/step-down unit that includes an element for correcting a power factor and that steps up or steps up/down a DC voltage from the rectifying unit; a central capacitor that is charged by the DC voltage from the voltage step-up/step-down unit for discharging to an output section at a rear stage; a first front-stage switching element that is serially arranged between a positive potential side of the voltage step-up/step-down unit and the positive potential side of the central capacitor; a second front-stage switching element that is serially arranged between a ground side of the voltage step-up/step-down unit and the ground side of the central capacitor; a first rear-stage switching element that is serially arranged between the positive potential side of the central capacitor and the positive potential side of the output section; a second rear-stage switching element that is serially arranged between the ground side of the central capacitor and the ground side of the output section; and a control unit that controls the voltage step-up/step-down unit, the first and second front-stage switching elements, and the first and second rear-stage switching elements.

The first and second front-stage switching elements and the first and second rear-stage switching elements alternately turn ON and OFF. After the first and second front-stage switching elements are in an ON state (i.e., the first and second rear-stage switching elements are in an OFF state) and charge the central capacitor, the first and second rear-stage switching elements are in an ON state (i.e., the first and second front-stage switching elements are in an OFF state) and output DC power.

With the structure described above, since the voltage step-up/step-down unit is provided on the AC input side relative to the central capacitor, the DC power can be supplied to a DC device having a high rated voltage using general household power. For example, a main battery (rated voltage: 330 V) of an EV or the like can be charged. Then, depending on the setting of duty, a voltage either higher or lower than an input voltage can be output. Further, the voltage step-up/step-down unit can not only be structured to supply the general household power to a DC device of a high rated voltage such as a main battery of an EV as described above, but also be structured to correct the power factor. That is, using the switching elements, the inductor, the capacitor and the like, it can rectify an input current waveform from an AC power supply, and can reduce reactive power.

Further, since the first and second front-stage switching elements and the first and second rear-stage switching elements alternately turn ON and OFF, when the charge (power) stored in the central capacitor is fed to the output side, the switching elements in an OFF state are always interposed between the AC input side and the output side. This interposition of the switching elements being in an OFF state can improve safety. Further, in a certain case, particularly insulation performance can be secured.
It is to be noted that, the positive potential side is a line side through which a current is caused to flow by the rectifying unit, and the ground side is a line side opposite thereto. Further, the voltage step-up/step-down unit for correcting the power factor may be a voltage step-up unit that only steps up a voltage. Alternatively, it may be a voltage step-up/step-down unit that literally steps up and down a voltage.

(2) The voltage step-up/step-down unit may be structured with an inductor, a voltage step-up/step-down unit switching element, a voltage step-up/step-down unit diode, and a voltage step-up/step-down unit capacitor, the voltage step-up/step-down unit diode may be inserted on the positive potential side, and the voltage step-up/step-down unit capacitor may be arranged between the positive potential side and the ground side at a final stage of the voltage step-up/step-down unit. Thus, with a simple circuit, in order to correct the power factor, the voltage step-up/step-down unit that only steps up a voltage, and the voltage step-up/step-down unit that steps up/down a voltage can be structured. Further, by selecting the voltage step-up/step-down unit switching element, the inductor, and the voltage step-up/step-down unit capacitor to set a frequency and the like, it becomes possible to correct the power factor. As a result, for example, an excessively great power distribution to home becomes unnecessary, and a load to the household power distribution system can be reduced.
Here, the voltage step-up/step-down unit corresponds to what is called an active smoothing filter, and includes a voltage step-up/step-down unit capacitor at the final stage for smoothing a voltage.

(3) In the voltage step-up/step-down unit, the voltage step-up/step-down unit switching element and the voltage step-up/step-down unit diode serially connected may be serially inserted on the positive potential side, and the inductor may be arranged between the positive potential side and the ground side between the voltage step-up/step-down unit switching element and the voltage step-up/step-down unit diode. Thus, the voltage step-up/step-down unit that steps up and down a voltage for correcting the power factor can be structured with a simple circuit.

(4) In the voltage step-up/step-down unit, the inductor and the voltage step-up/step-down unit diode serially connected may be serially inserted on the positive potential side, and the voltage step-up/step-down unit switching element may be arranged between the positive potential side and the ground side between the inductor and the voltage step-up/step-down unit diode. Thus, the voltage step-up/step-down unit that only steps up a voltage for correcting the power factor can be structured with a simple circuit.

(5) The voltage step-up/step-down unit capacitor may be formed with a plurality of voltage step-up/step-down unit capacitors, the first and/or the second front-stage switching element(s) may each be formed with a plurality of switching elements, the plurality of first front-stage switching elements may be arranged between the positive potential side of the central capacitor and the positive potential side or the ground side of a predetermined one of the voltage step-up/step-down unit capacitors, the plurality of second front-stage switching elements may be arranged between the ground side of the central capacitor and the positive potential side or the ground side of a predetermined one of the voltage step-up/step-down unit capacitors, and the control unit may control the switching elements so as to change an output voltage discharged from the central capacitor. Thus, without the necessity of using a transformer, arrangement of the capacitors and the front-stage switching elements of the voltage step-up/step-down unit makes it possible to change an output voltage according to a required voltage. The capacity, the arrangement structure and the like of the plurality of voltage step-up/step-down unit capacitors, and the connection structure and the like of the first and second front-stage switching elements can be set in accordance with required performance.

(6) The central capacitor may be formed with a plurality of central capacitors, the first and/or second front-stage switching element(s), and/or, the first and/or second rear-stage switching element(s) may each be formed with a plurality of switching elements, the plurality of first front-stage switching elements and/or the plurality of first rear-stage switching elements may be arranged between the positive potential side and the positive potential side or the ground side of a predetermined one of the central capacitors, the plurality of second front-stage switching elements and/or the plurality of second rear-stage switching elements may be arranged between the ground side and the positive potential side or the ground side of the one of the central capacitors, and the control unit may control the switching elements so as to change an output voltage discharged from the one of the central capacitors. Thus, without the necessity of using a transformer, the output voltage can more widely be changed in accordance with a request for a broader range.

(7) An output section capacitor may further be included on an output side of the first and second rear-stage switching elements, wherein the output section capacitor may be formed with a plurality of output section capacitors, the first and/or second rear-stage switching element(s) may each be formed with a plurality of switching elements, the plurality of first rear-stage switching elements may be arranged between the positive potential side of the central capacitor and the positive potential side or the ground side of a predetermined one of the output section capacitors, the plurality of second rear-stage switching elements may be arranged between the ground side of the central capacitor and the positive potential side or the ground side of a predetermined voltage step-up/step-down unit capacitor (sic), and the control unit may control the switching elements so as to change an output voltage discharged from the output section. Thus, without the necessity of using a transformer, by employing the plurality of capacitors at the output section, an output voltage can easily be changed.

(8) A voltage monitoring unit that monitors a voltage of each of the first and second front-stage switching elements and the first and second rear-stage switching elements may further be included. Thus, it becomes possible to address an inrush current or the like, and to achieve a fail-safe.

(9) When a voltage across the switching elements is equal to or greater than a reference voltage, the control unit may reduce a gate voltage or set a gate voltage to zero, or a circuitry may reduce a gate voltage or set a gate voltage to zero. Thus, through a software manner (program logic) or a hardwire manner (wired logic), it becomes possible to prevent an inrush current, and to achieve the fail-safe means.

(10) The output section may be provided with a sub-relay in parallel to a relay, an electric resistor being serially arranged in the sub-relay. Use of the sub-relay having the resistor serially connected between the sub-relay and a secondary battery in the output section for precharging the central capacitor can reduce an inrush current to the central capacitor.

(11) The control unit that controls the first and second front- and rear-stage switching elements and the voltage step-up/step-down unit switching element may be included, wherein the control unit may increase an on-resistance of the first and second front-stage switching elements at start of use before the central capacitor is charged to a minimum output voltage of the voltage step-up/step-down unit. Thus, upon activation, by reducing a gate voltage of the switching element to be driven, for example, the on-resistance can be increased. Thus, an inrush current to the central capacitor can be reduced.

(12) The control unit may control, upon activation, the voltage step-up/step-down unit switching element such that an output voltage of the voltage step-up/step-down unit is increased at an increase rate equal to or less than a predetermined value. By gradually increasing the output voltage, the ON duty D of the first and second front-stage switching elements can gradually be increased from a minimum acceptable value. As a result, an inrush current to the central capacitor can be reduced.

(13) The control unit may perform control such that, when DC power is generated from AC power and output from the output section, a voltage step-up/step-down output voltage Va from the voltage step-up/step-down unit is higher than a voltage Vb of the central capacitor. Thus, the output of a desired voltage can stably be achieved. Further, since a bias voltage is applied in the forward direction, even in a case where normal semiconductor switching elements (withstanding a voltage in the forward direction) having no reverse blocking ability are used, the AC input side and the output side are surely insulated from each other. It is also possible to control a potential Vc of the output section at the rear stage relative to the central capacitor so as to satisfy the relationship Vc < Vb < Va.

(14) The first and second front-stage switching elements and the first and second rear-stage switching elements may each have a reverse blocking ability. Thus, by alternately turning ON and OFF the first and second front-stage switching elements and the first and second rear-stage switching elements, the AC input side and the output side are surely insulated from each other, and safety can further be improved. The switching element possessing the reverse blocking ability may be the following element. A reverse blocking IGBT (Insulated gate bipolar transistor) can cover the highest frequency band. Though a GTO (Gate turn-off) thyristor has a great capacity, the frequency is limited.

(15) A reverse blocking diode may serially be inserted in each of the first and second front-stage switching elements and the first and second rear-stage switching elements. Thus, despite use of MOSFETs, general IGBTs, and JFETs, by inserting the reverse blocking diodes and turning the first and second front-stage switching elements and the first and second rear-stage switching elements alternately ON and OFF to thereby supply a DC device with DC power, the AC input side and the output side are surely insulated from each other. Thus, safety can further be improved.

(16) A secondary battery may be connected to the output section, and the voltage step-up/step-down unit diode may be replaced by a switching element, and four diodes forming a bridge in the rectifying unit may be replaced by four switching elements, so as to obtain a compatible device that supplies AC power from the secondary battery to the AC power side. Thus, it becomes possible to supply power to a household electric appliance or the like using an automobile battery. This is useful in case of power outage or no power distribution network is available outdoors. Further, in addition to the case of power outage or camping, by charging inexpensive nighttime power and using it daytime, the power cost can be saved.

(17) A bidirectional switching element possessing a reverse blocking ability may be employed as each of the first and second front-stage switching elements and the first and second rear-stage switching elements, in a compatible device that supplies AC power from the secondary battery to the AC power side. Thus, the switching elements possess a conducting/blocking ability in both the forward/reverse directions. Accordingly, while securing the bidirectional insulation between the household AC side and the automobile secondary battery side, power can mutually be exchanged.

### BRIEF DESCRIPTION OF DRAWINGS

FIG. 1 is a diagram showing a power conversion device according to a first embodiment of the present invention;
FIG. 2 is a diagram showing a batch power-relay unit in a power conversion device according to a second embodiment of the present invention;
FIG. 3 is a diagram showing an effect of a gate voltage on the relationship between a drain current and a drain-source voltage;
FIG. 4 is a diagram showing a power conversion device according to a third embodiment of the present invention;
FIG. 5 is a diagram for explaining the usage of a power conversion device according to a fourth embodiment of the present invention;
FIG. 6 is a diagram showing a power conversion device according to a sixth embodiment of the present invention;
FIG. 7 is a diagram showing a power conversion device according to a seventh embodiment of the present invention;
FIG. 8 is a diagram showing a power conversion device according to an eighth embodiment of the present invention;
FIG. 9 is a diagram showing a power conversion device according to a ninth embodiment of the present invention;
FIG. 10 is a diagram showing a power conversion device according to a tenth embodiment of the present invention;
FIG. 11 is a diagram for explaining bidirectional reverse blocking switching elements of a batch power-relay unit in the power conversion device shown in FIG. 10;
FIG. 12 is a diagram showing a power conversion device according to an eleventh embodiment of the present invention; and
FIG. 13 is a diagram showing a power conversion device according to a twelfth embodiment of the present invention.

### DESCRIPTION OF EMBODIMENTS

### (First Embodiment)

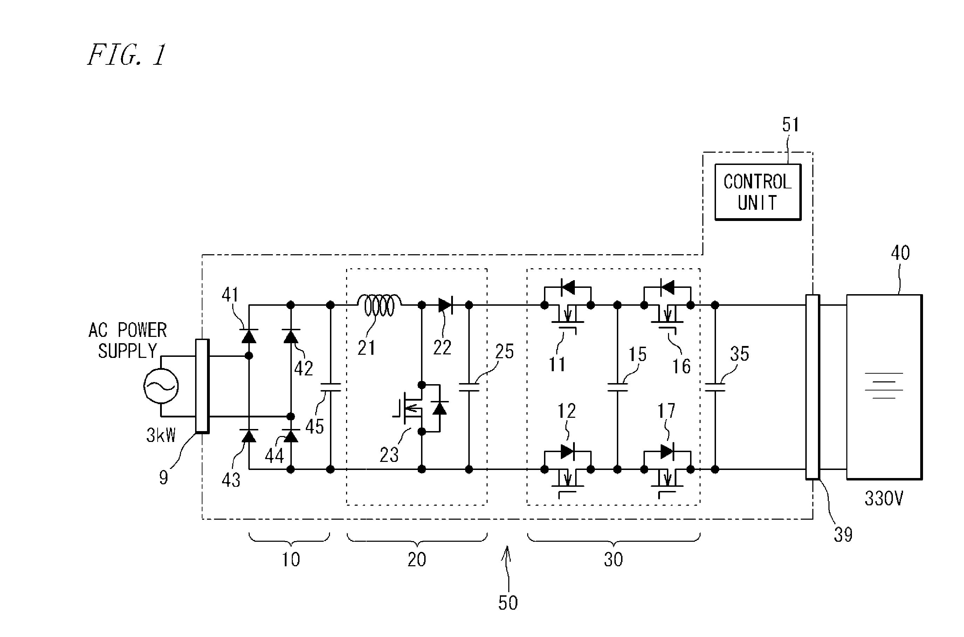

FIG. 1 is a diagram showing one example of a power conversion device 50 according to a first embodiment of the present invention. The power conversion device 50 is intended to charge a battery (main battery) 40 as a secondary battery in an EV or the like through the use of a household AC power supply. The power conversion device 50 is structured by the following four general units. Namely, (1) a rectifying unit 10, (2) a voltage step-up unit (including an element for correcting the power factor) 20, (3) a batch power-relay unit 30, and (4) a control unit 51.

### <<Rectifying Unit>>

First, the rectifying unit 10 is structured with four diodes 41 to 44 forming a bridge. The rectifying unit 10 rectifies AC power received from an AC power supply via an input section 9, to provide pulsed DC power. In order to smooth the voltage, a smoothing capacitor 45 is provided to follow the bridge.

### <<Voltage Step-up Unit>>

The voltage step-up unit 20 is structured with an inductor 21, a diode 22 whose output side is in the forward direction, a voltage step-up unit switching element 23, and a voltage step-up unit capacitor 25. As the voltage step-up unit switching element 23, a MOSFET (Metal Oxide Semiconductor Field Effect Transistor) can be used, for example. To a gate of the MOSFET 23, the control unit 51 provides a switching signal of a frequency of several kHz to several-hundred Hz, which is fully greater than an AC power supply frequency. By carrying out switching at such a frequency, it becomes possible to cause an input current waveform from the AC power supply to approximate a sine wave, and to correct the power factor. Further, a voltage which is boosted by chopping of the current flowing from the inductor 21 to the MOSFET 23 can be obtained. With this voltage, the current flows from the inductor 21 to the voltage step-up unit capacitor 25 via the diode 22. As a result, a smoothed DC voltage is stored in the voltage step-up unit capacitor 25.

### <<Batch Power-relay Unit>>

In the batch power-relay unit 30, when a first front-stage switching element 11 and a second front-stage switching element 12 are in an ON state, and a first rear-stage switching element 16 and a second rear-stage switching element 17 are in an OFF state, a central capacitor 15 is charged by the DC voltage output from the voltage step-up unit 20.

When charging is performed, between the input section 9 for the AC power supply and an output section 39 to a battery 40, the first rear-stage switching element 16 and the second rear-stage switching element 17 in an OFF state are interposed. The charged central capacitor 15 reaches a predetermined voltage. A voltage Vb across opposite terminals of the central capacitor 15 is preferably lower than an output voltage Va from the voltage step-up unit 20, or the voltage Va occurring in the voltage step-up unit capacitor 25. This is for stably retaining an output voltage Vc from the output section 39 to the battery 40.

After the central capacitor 15 is charged, it is discharged in order to charge the battery 40. When discharging is performed, the first front-stage switching element 11 and the second front-stage switching element 12 are turned OFF, and the first rear-stage switching element 16 and the second rear-stage switching element 17 are turned ON. Though the line from the control unit 51 is not shown, the control electrode (gate electrode or the like) of each of the switching elements is provided with a signal from the control unit 51. The turning ON/OFF operations of the above-described switching elements 11, 12, 16, and 17 are performed at 10 kHz or more.

Further, in order to smooth the voltage being charged to the battery 40 in the output section 39 or the like, a smoothing capacitor 35 is provided at the rear stage relative to the batch power-relay unit 30.
When the battery 40 is charged, between the input section 9 for the AC power supply and the output section 39 to the battery 40, the first and second front-stage switching elements 11 and 12 in an OFF state are interposed.

### <<Control Unit>>

Though not shown, the control unit 51 is connected to a control electrode of each of the voltage step-up unit switching element 23, and the four switching elements 11, 12, 16, and 17 of the batch power-relay unit 30 so as to be capable of transmitting a control signal. The control unit 51 outputs a signal of instructing the switching of ON/OFF, to thereby control the operation of each of the switching elements. For example, as will be described in the following, the control unit 51 is also capable of reducing the gate voltage to increase the on-resistance of each of the switching elements 11 and 12, to thereby suppress an inrush current to the central capacitor 15.

According to the power conversion device 50 shown in FIG. 1, the battery 40 of an EV, an HV or the like can be charged using a general household AC power supply. In this case, since the voltage step-up unit 20 that includes the switching element 23 for power factor correction and the like steps up the voltage, the battery 40 can be charged effectively from a limited power distribution without inviting an excessively great household power distribution.

It is to be noted that, the voltage step-up unit 20 stepping up the voltage achieves efficient and stable charging from the household AC power supply to the main battery of an EV or the like whose rated voltage is 330 V.
Further, as shown in FIG. 1, the power conversion device 50 realizes insulation between the input and the output sides without the necessity of using a transformer. That is, between the input section 9 for the AC power supply and the output section 39 to the battery 40, the switching elements in an OFF state are always interposed.

In the present embodiment, various semiconductor elements can be used as the switching elements 11, 12, 16, and 17. For example, they may be MOSFETs, JFETs, bipolar transistors or the like which do not possess the reverse blocking ability; or may be reverse blocking IGBTs which possess the reverse blocking ability. In a case where the semiconductor elements possessing the reverse blocking ability are used, the input side and the output side are insulated from each other. Further, even in a case where the reverse blocking ability is not provided, certain improvement in safety can be achieved depending on a control method executed by the control unit.

### (Second Embodiment)

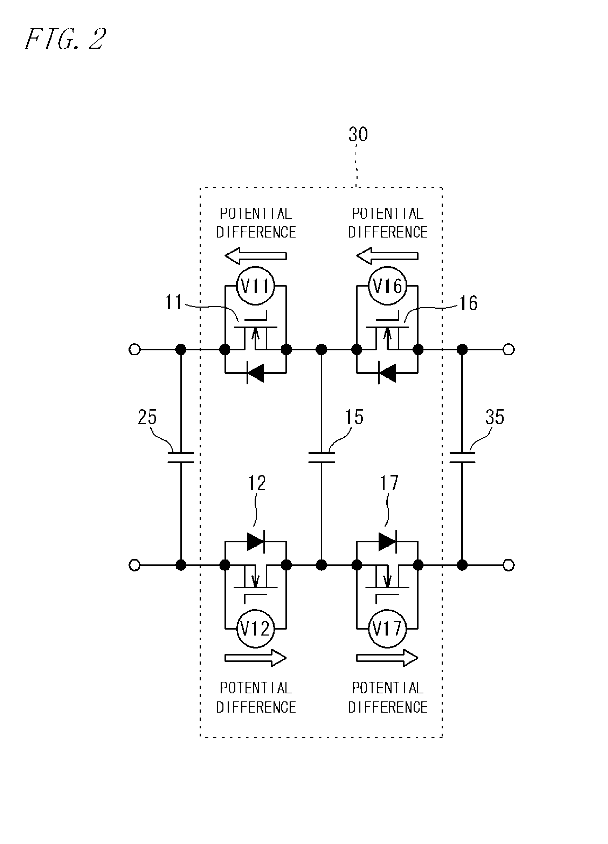

FIG. 2 is a diagram showing one example of a batch power-relay unit 30 including four switching elements 11, 12, 16, and 17 in a power conversion device according to a second embodiment of the present invention. The batch power-relay unit 30 shown in FIG. 2 is intended to prevent an instantaneous inrush current when charging to a capacitor is carried out, and to achieve a fail-safe. In the present embodiment, a voltage applied to each of the four switching elements 11, 12, 16, and 17 is monitored. The voltage being monitored is a drain-source voltage. The voltage can be detected by voltage sensors V11, V12, V16, and V17, for example, and an output of each voltage sensor is sent to the control unit 51 (FIG. 1). When the voltage across each switching element becomes equal to or more than a reference voltage, the control unit 51 exerts the control of reducing a gate voltage or setting the gate voltage to zero.

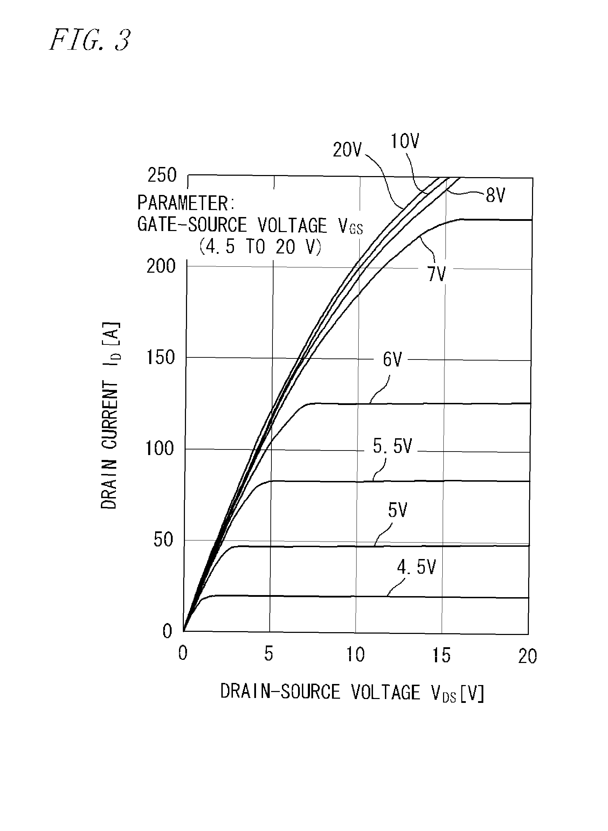

FIG. 3 is a diagram showing an effect of the gate voltage on the relationship between the drain-source voltage and a drain current. The drain current flows through the front-stage switching elements 11 and 12, the rear-stage switching elements 16 and 17, and the central capacitor 15. The gate voltage is a voltage of a control-purpose signal that the control unit 51 provides to the gate of each of the switching elements 11, 12, 16, and 17. With reference to FIG. 3, reduction in the gate voltage achieves reduction in the drain current. In particular, when setting the gate voltage to zero, it becomes possible to cause the drain current to assume an extremely small value. That is, the voltage applied to each of the switching elements 11, 12, 16, and 17 is monitored, and when it becomes equal to or more than the reference voltage, the gate voltage is reduced or set to zero. In this manner, occurrence of an instantaneous inrush current can be prevented, and a fail-safe can be achieved.

### (Third Embodiment)

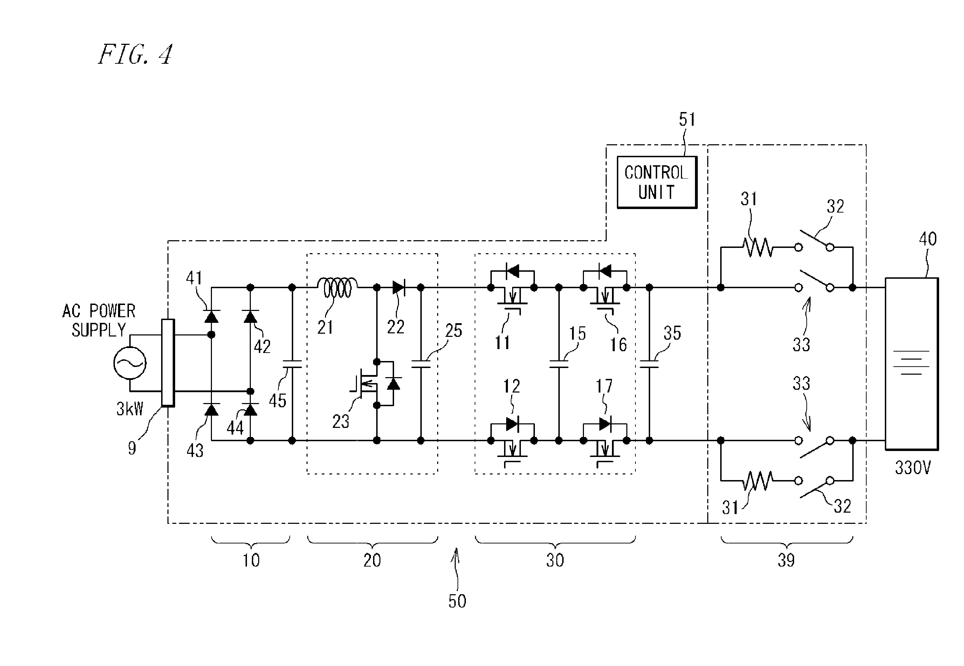

FIG. 4 is a diagram showing one example of a power conversion device 50 according to a third embodiment of the present invention. The third embodiment is **characterized in that**, in the output section 39 of the power conversion device shown in FIG. 1, sub-relays 32 each having a serially arranged electric resistor 31 are provided in parallel to main relays 33. It is to be noted that, as to the relays, their contacts are only shown, while exciting coils are not shown.

In the output section 39, when the power conversion device 50 is activated, under the control of the control unit 51, the main relays 33 enter an OFF state and the sub-relays 32 enter an ON state. Further, the control unit 51 causes the first front-stage switching element 11 and the second front-stage switching element 12 to enter an OFF state and the first rear-stage switching element 16 and the second rear-stage switching element 17 to enter an ON state, in the batch power-relay unit 30. Thus, a current flows from the battery 40 to the central capacitor 15 via the resistor 31, whereby the central capacitor 15 is pre-charged.

When an initial operation stage has elapsed and a steady operation is started, the control unit 51 turns OFF the first rear-stage switching element 16 and the second rear-stage switching element 17, and further, turns the sub-relays 32 OFF while causing the main relays 33 to enter an ON state.
As described above, by pre-charging the central capacitor 15 when activated, it becomes possible to reduce an inrush current from the AC power supply to the central capacitor 15.

### (Fourth Embodiment)

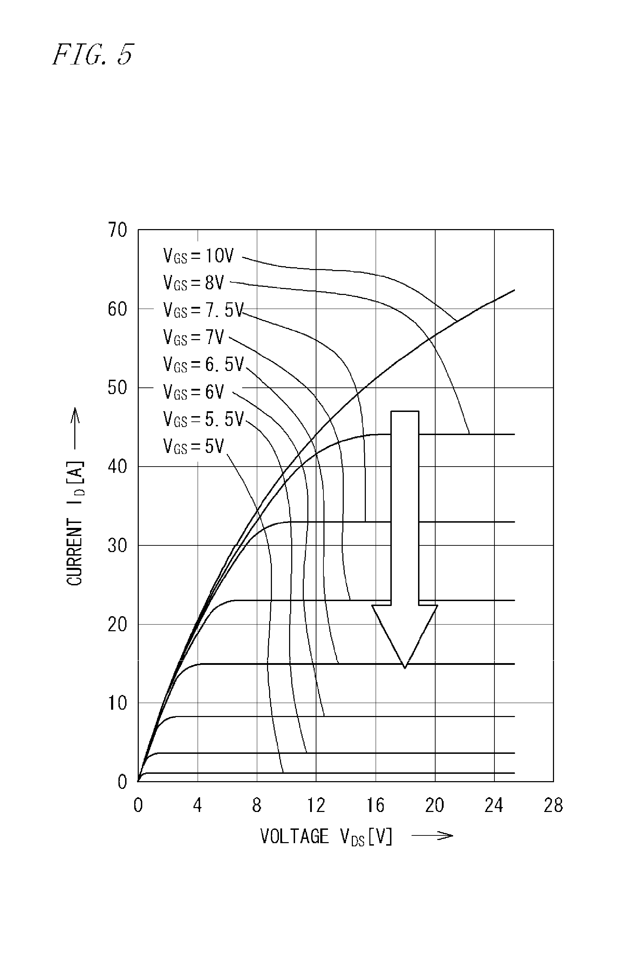

A fourth embodiment of the present invention is **characterized in that**, when the control unit 51 performs control over the first and second switching elements 11 and 12, a gate voltage is reduced. As shown in FIG. 5, by reducing a gate voltage V_{GS}, the on-resistance of each of the switching elements is increased. By increasing the on-resistance of the switching elements 11 and 12, an inrush current to the central capacitor 15 at the initial operation stage can be reduced.

### (Fifth Embodiment)

In a fifth embodiment of the present invention, the control unit 51 controls the voltage step-up unit switching element 23 of the voltage step-up unit 20, to gradually increase a stepped-up voltage. Defining that an input voltage to the voltage step-up unit 20 is V₁; and a boosted voltage being output is V₂; and an ON duty ratio of the voltage step-up unit switching element 23 is D, the following relationship is established: V₂ = V₁ / (1 - D). Based on the relationship, the control unit 51 gradually increases the voltage from the minimum value at which the ON duty ratio is permitted, instead of increasing the voltage to a predetermined high voltage at once, upon activation. Thus, the output voltage V₂ can gradually be increased from the low voltage. In other words, the output voltage can be increased at an increase rate equal to or lower than a predetermined value. With such a control method, an inrush current to the central capacitor 15 can be reduced. It is to be noted that, the foregoing Va, Vb, and Vc in connection with the discussion of the magnitude of the voltages Va, Vb, and Vc are the voltages in the steady state.

### (Sixth Embodiment)

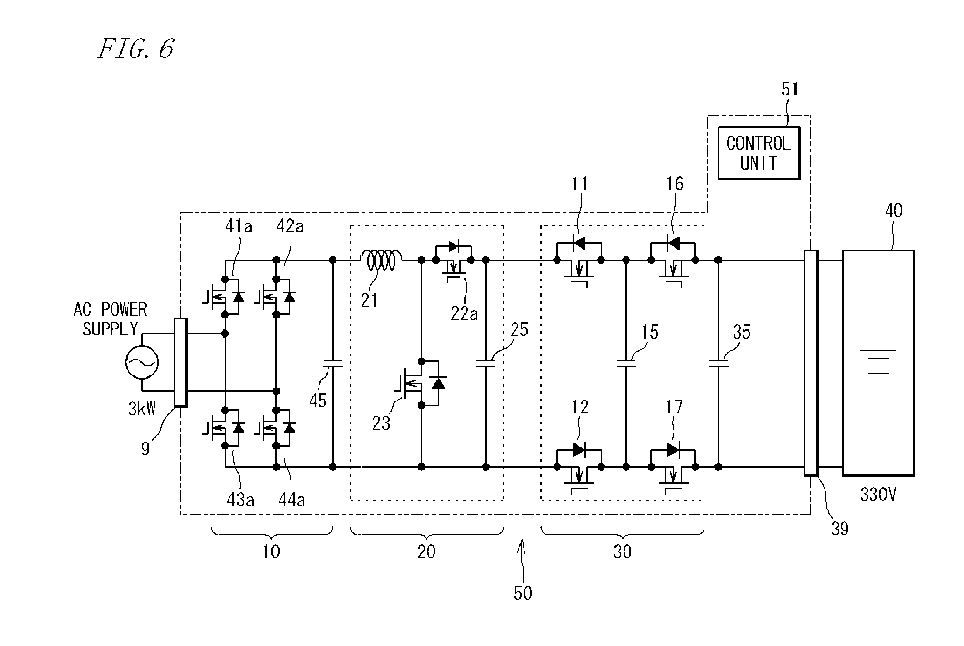

FIG. 6 is a diagram showing one example of a power conversion device 50 according to a sixth embodiment of the present invention. The power conversion device 50 is **characterized in that**, in terms of its structure, the diode 22 of the voltage step-up unit 20 in the power conversion device 50 shown in FIG. 1 is replaced by a switching element 22a, and the four diodes 41, 42, 43, and 44 of the rectifying unit 10 are replaced by switching elements 41a, 42a, 43a, and 44a.

The replacement of the diode by the switching element forms an inverter bridge 10. Further, by turning OFF all the switching elements 41a, 42a, 43a, and 44a, the inverter bridge 10 can also be operated as a normal diode bridge using parasitic diodes. That is, when it is used as an inverter bridge, AC power can be supplied to the AC power supply using the power of the battery 40. Alternatively, by using as a diode bridge, charging from the AC power supply to the battery 40 can be carried out.

In the control unit 51, reverse-conversion software for supplying AC power to the AC power supply using the power of the battery 40 is installed. Then, the control unit 51 can switch from the normal control of converting from AC to DC to the control of reverse-conversion.
According to such a conversion/reverse-conversion compatible device, it becomes possible to exchange power between the home and the automobile. For example, it becomes possible to charge the battery 40 with inexpensive nighttime power, and to drive a household air conditioner in the daytime by the power of the battery 40.

As the four switching elements 11, 12, 16, and 17 of the batch power-relay unit 30 shown in FIG. 6, MOSFETs, JFETs or the like can be used. By the control exerted by the control unit 51, power can be supplied from the battery 40 to the AC side. In this case, in the voltage step-up unit 20, the voltage is reduced form the aforementioned voltage Va to a voltage required to generate the household AC voltage. By exerting control so as to cause all the elements at the front stage and at the rear stage to be constantly ON when supplying power to the AC side, it becomes possible to reduce a conduction loss.

### (Seventh Embodiment)

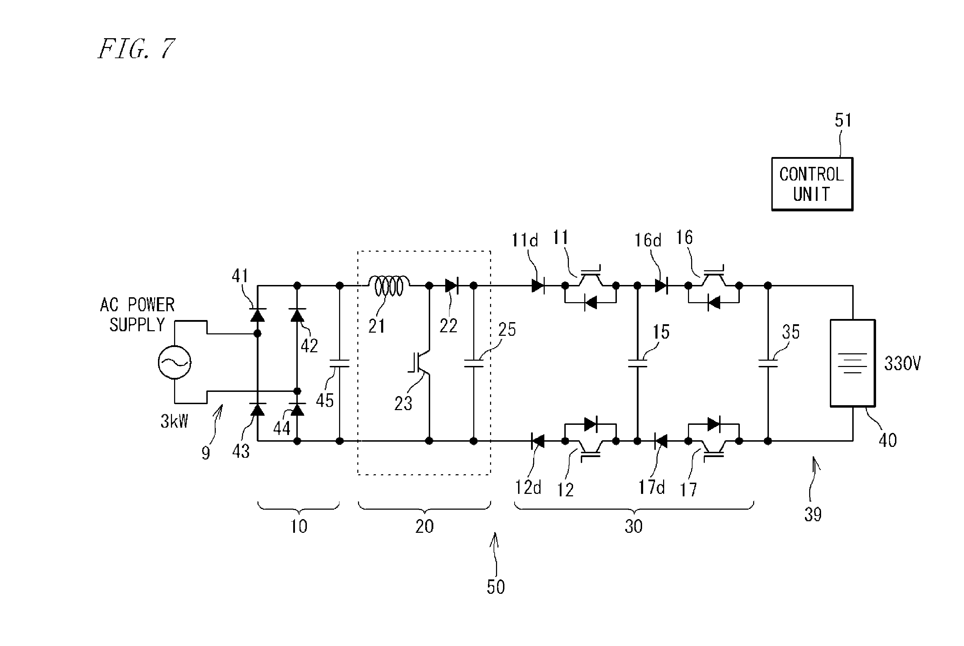

FIG. 7 is a diagram showing one example of a power conversion device 50 according to a seventh embodiment of the present invention. The power conversion device 50 is **characterized in that**, into all the four switching elements 11, 12, 16, and 17 in the batch power-relay unit 30, reverse blocking diodes 11d, 12d, 16d, and 17d are inserted in series.

When the switching elements 11, 12, 16, and 17 of the batch power-relay unit 30 do not particularly possess the reverse blocking ability as in normal IGBTs, MOSFETs, and JFETs, and no reverse blocking diodes are inserted thereinto, no insulation is established in the direction from the load (battery 40) to the AC power supply.
Accordingly, though a certain level of safety can be obtained by interposing the switching elements in an OFF state depending on the control method performed by the control unit 51, it is impossible to obtain the insulation at a level obtained when a transformer is interposed between the input side and the load side.

However, as shown in FIG. 7, the arrangement of the reverse blocking diodes 11d, 12d, 16d, and 17d in the switching elements 11, 12, 16, and 17, respectively, can obtain the stable insulation of a high level in the direction from the output side to the input side, similarly to the case where a transformer is used.

### (Eighth Embodiment)

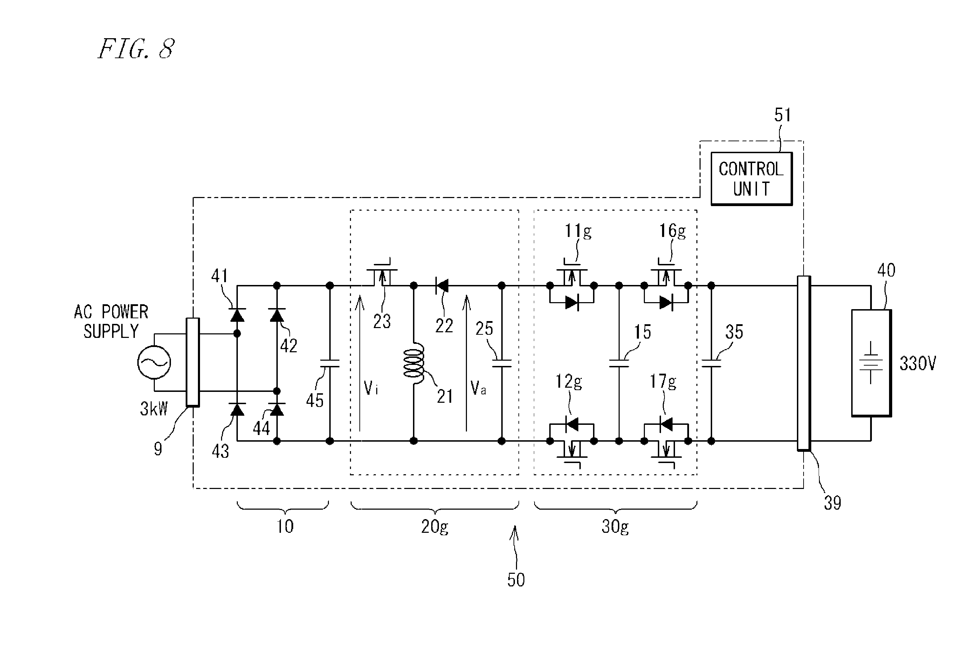

FIG. 8 is a diagram showing one example of a power conversion device 50 according to an eighth embodiment of the present invention. The voltage step-up/step-down unit 20 for correcting the power factor in the power conversion device 50 having exemplarily been shown in the first embodiment and the like is structured with the boost converter. However, in the present embodiment, a power factor correction circuit is structured with a buck-boost converter 20g which can step up and down a voltage. As shown in FIG. 8, defining that an input voltage at the voltage step-up/step-down unit (converter) 20g for correcting the power factor is Vi; an output voltage is Va; and an ON duty of the voltage step-up/step-down unit switching element 23 is D, the relationship Va = - {D / (1 - D)} . Vi is established.

Employing such a circuit configuration, the output voltage can be higher or lower than the input voltage, depending on the setting of duty. That is, both of Vi < Va and Vi > Va are possible. However, since the polarity of the output voltage is inverted, front stage and rear-stage switching elements 11g, 12g, 16g, 17g relative to the central capacitor 15 in the batch power-relay unit 30g have their polarity inverted.

The converter that only steps up a voltage cannot reduce the output voltage Va to be lower than the input voltage Vi. That is, Vi < Va cannot be attained. Further, the batch power-relay unit structured with the central capacitor 15 and the switching elements 11g, 12g, 16g, and 17g only establishes the insulation between the AC power supply and the battery 40, and does not possess any voltage adjusting function. Therefore, particularly with a power supply of AC 200 V, the lower limit of the possible output voltage range is approximately 200 V rms × 2^{1/2} = 282 V and hence, it cannot address charging of a battery of a rated voltage of 200 V or the like.

However, as described above, by employing the voltage step-up/step-down unit 20g that can step up and down a voltage, as compared to a converter that only steps up a voltage, it becomes possible to achieve Vi > Va. As a result, charging to a battery of a rated voltage of approximately 200 V or less than that is possible.

### (Ninth Embodiment)

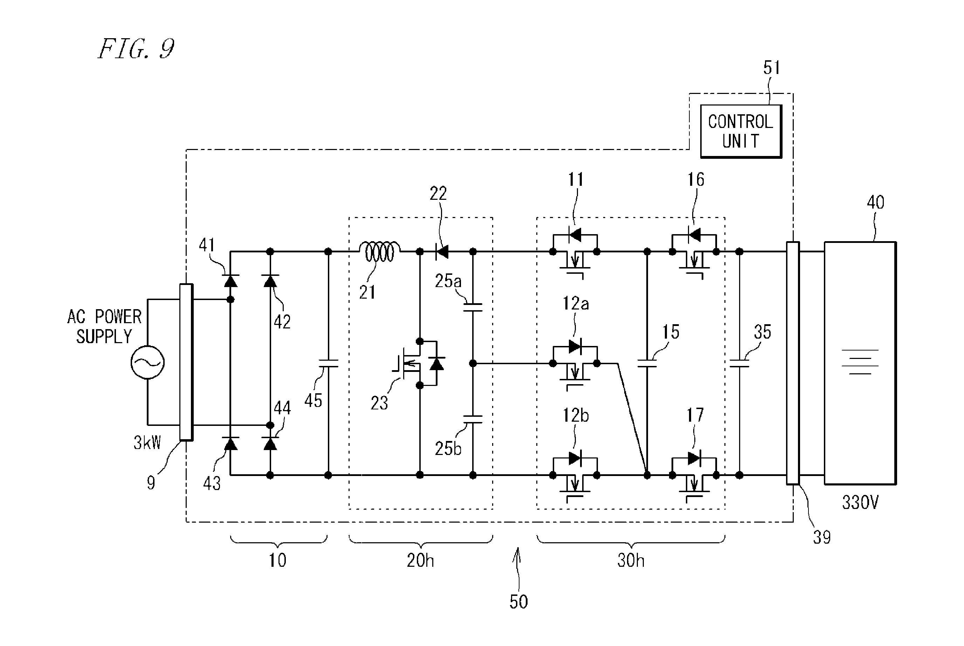

FIG. 9 is a diagram showing one example of a power conversion device 50 according to a ninth embodiment of the present invention. In the voltage step-up/step-down unit 20 for correcting the power factor of in power conversion device 50 having exemplarily been shown in the first embodiment and the like, the number of the voltage step-up/step-down unit capacitor 25 arranged at the final stage of the voltage step-up/step-down unit is one. However, in the present embodiment, as shown in FIG. 9, a plurality of voltage step-up/step-down unit capacitors 25a and 25b are arranged. Further, between the positive potential side and the ground side of the plurality of voltage step-up/step-down unit capacitors 25a and 25b, and the ground side of the central capacitor 15, a plurality of second front-stage switching elements 12a and 12b are arranged. The remaining portions in a voltage step-up/step-down unit 20h other than the capacitors 25a and 25b is the same as the voltage step-up unit 20 according to the first embodiment.

The control unit 51 switches the switching elements 11, 12a, 12b, 16, and 17 in accordance with a required voltage, to thereby change the output voltage. Thus, without the necessity of using a transformer, or the necessity of taking into consideration the setting of the duty as in the eighth embodiment (FIG. 8), the output voltage can be changed. Further, without being limited by an effective voltage of the AC power supply, a battery of a rated voltage in a predetermined range can be charged. Further, the input side of the AC power supply and the output side of the direct current can be insulated from each other at the aforementioned level.

It is to be noted that, FIG. 9 shows a case where the plurality of voltage step-up/step-down unit capacitors 25a and 25b and the plurality of second front-stage switching elements 12a and 12b are employed. However, in addition to the plurality of second front-stage switching elements, a plurality of first front-stage switching elements may be employed and connected to the plurality of voltage step-up/step-down unit capacitors, to thereby change the output voltage.

Further, a plurality of central capacitors 15 (in series) may be employed, and a plurality of first and/or second front-stage switching elements, and/or a plurality of first and/or second front(sic)-stage switching elements may be employed. In this manner, by employing the plurality of central capacitors and the plurality of all of or either one of the switching elements, it becomes possible to control the output voltage to be changed in a wider range.
Still further, a plurality of capacitors 35 (in series) in the output section may be employed, and a plurality of first rear-stage switching elements and/or a plurality of second rear-stage switching elements may be employed. Thus, by employing the plurality of capacitors at the output section, it becomes possible to easily control and change the output voltage.

### (Tenth Embodiment)

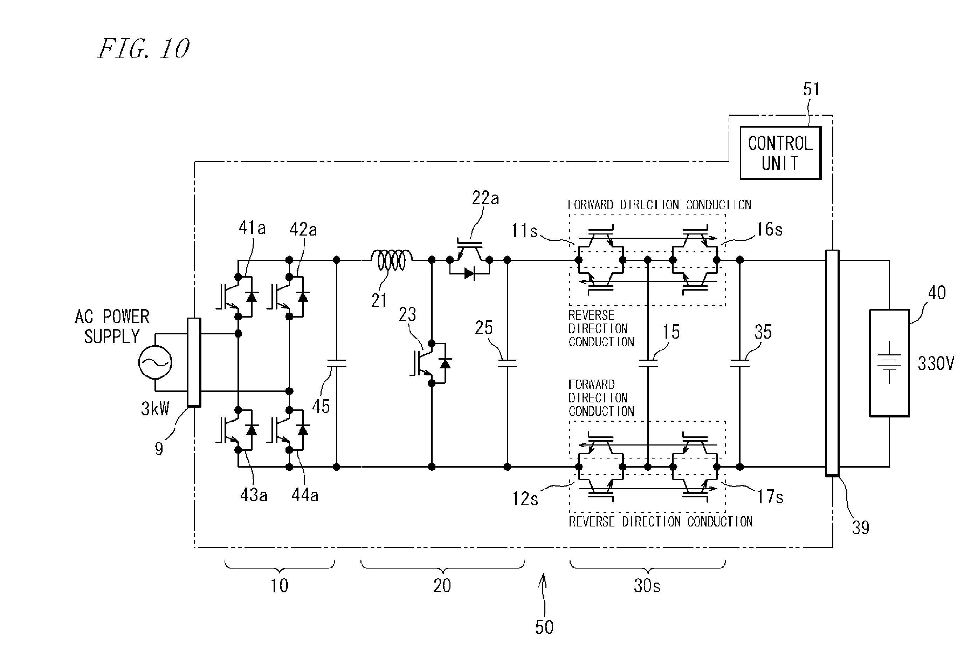

FIG. 10 is a diagram showing one example of a power conversion device 50 according to a tenth embodiment of the present invention. The power conversion device 50 according to the sixth embodiment is the device in which the diodes are replaced by the switching elements, whereby it is possible not only to charge the battery 40 from the AC power supply, but also to supply AC power to the AC power supply using the power of the battery 40. The power conversion device 50 according to the present embodiment is **characterized in that**, while possessing the same function as that of the sixth embodiment, switching elements 11s, 12s, 16s, and 17s of a batch power-relay unit 30s are each provided as a bidirectional switching element possessing the reverse blocking ability. As such bidirectional switching elements possessing the reverse blocking ability, reverse blocking IGBTs can be used.

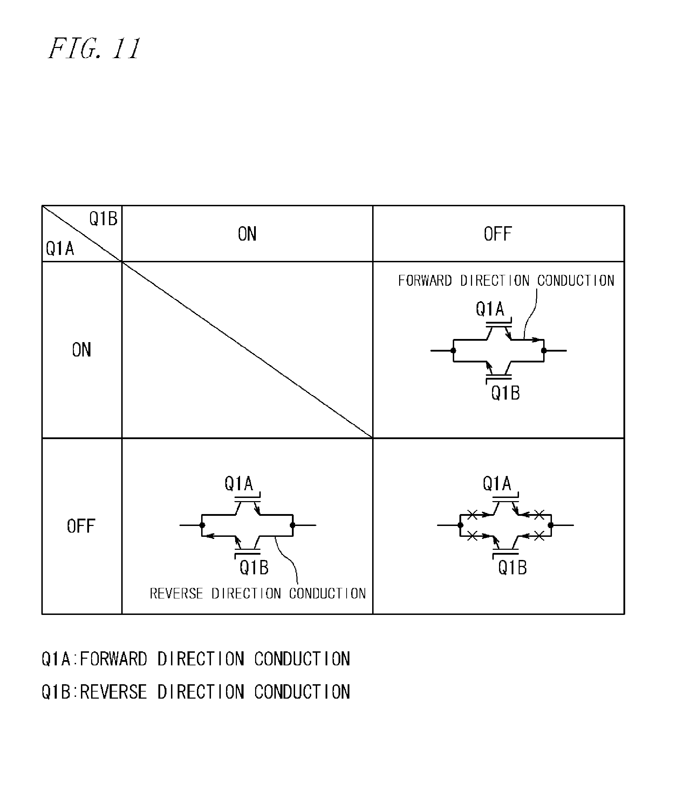

As shown in FIG. 11, the switching elements 11s, 12s, 16s, and 17s each have a forward direction conduction section and a reverse direction conduction section, and when a conduction section in one direction is in operation, the conduction section in the reverse direction exhibits the reverse blocking function. In each of the bidirectional switching elements, Q1A denotes the forward direction conduction section, and Q2B (sic) denotes the reverse direction conduction section. Thus, the switching elements 11s, 12s, 16s, and 17s each possess the conducting/blocking ability in the forward/reverse directions. As a result, power can mutually be exchanged between the AC power supply (household AC power supply) and the battery 40 while securing the bidirectional insulation therebetween.

### (Eleventh Embodiment)

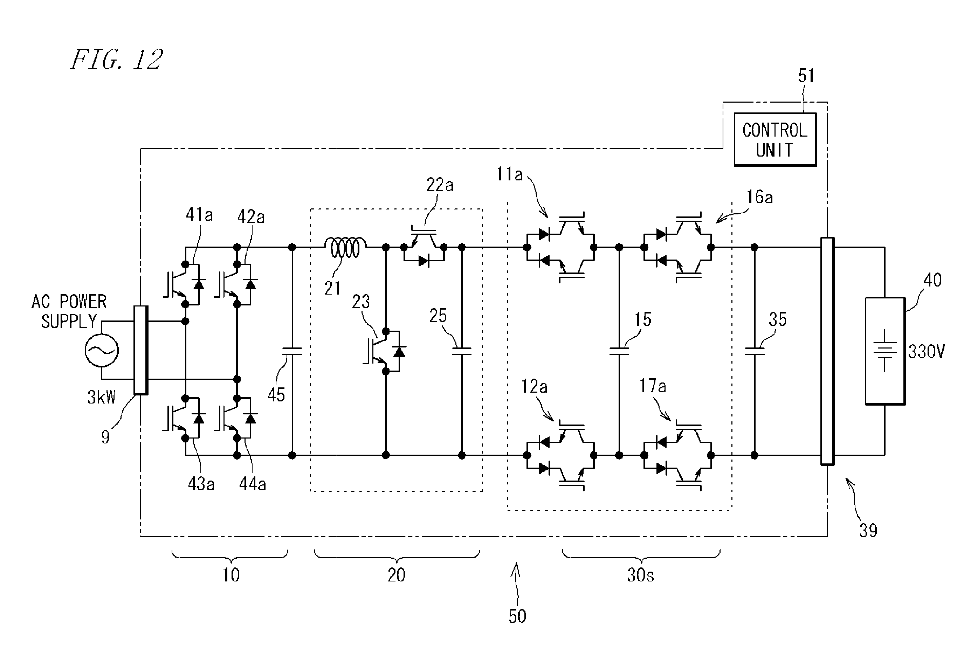

FIG. 12 is a diagram showing one example of a power conversion device 50 according to an eleventh embodiment of the present invention. Similarly to the tenth embodiment, the power conversion device 50 of the present embodiment makes it possible to supply AC power to the AC power supply using the power of the battery 40, and additionally, the reverse blocking ability is provided by elements of the mode being different from those according to the tenth embodiment. The present embodiment is **characterized in that**, in order to provide the reverse blocking ability, as switching elements 11a, 12a, 16a, and 17a of the batch power-relay unit 30s, combinations of IGBTs possessing no reverse blocking ability and normal diodes inherently possessing the reverse blocking ability are used.

The switching elements 11a, 12a, 16a, and 17a each have a forward direction conduction section and a reverse direction conduction section, and when a conduction section in one direction is in operation, the conduction section in the reverse direction exhibits the reverse blocking function. Thus, the switching elements 11a, 12a, 16a, and 17a each possess the conducting/blocking ability in the forward/reverse directions. As a result, power can mutually be exchanged between the AC power supply (household AC power supply) and the battery 40 while securing the bidirectional insulation therebetween.
Further, in the present embodiment, since the normal IGBTs possessing no reverse blocking ability and the normal diodes are combined, reduction in the costs for the components can be achieved.

### (Twelfth Embodiment)

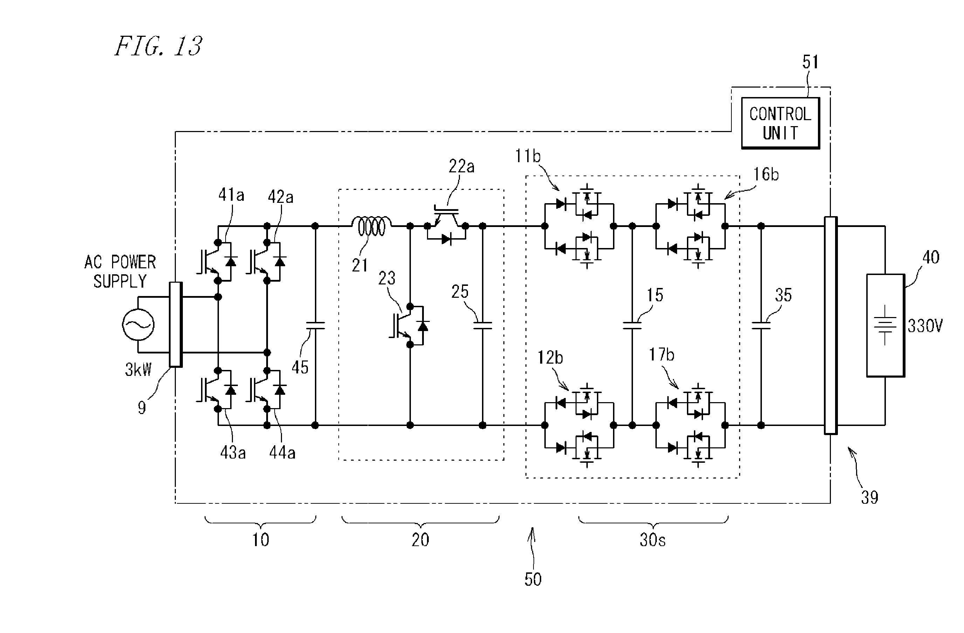

FIG. 13 is a diagram showing one example of a power conversion device 50 according to a twelfth embodiment of the present invention. Similarly to the eleventh embodiment, the power conversion device 50 of the present embodiment makes it possible to supply AC power to the AC power supply using the power of the battery 40, and additionally, the reverse blocking ability is provided by elements of the mode being different from those according to the tenth embodiment. The present embodiment is **characterized in that**, in order to provide the reverse blocking ability, as switching elements 11b, 12b, 16b, and 17b of the batch power-relay unit 30s, combinations of MOSFETs possessing no reverse blocking ability and diodes inherently possessing the reverse blocking ability are used.

Similarly to the tenth and eleventh embodiments, the switching elements 11b, 12b, 16b, and 17b each have a forward direction conduction section and a reverse direction conduction section, and when a conduction section in one direction is in operation, the conduction section in the reverse direction exhibits the reverse blocking function. As a result, power can mutually be exchanged between the AC power supply (household AC power supply) and the battery 40 while securing the bidirectional insulation therebetween.
Further, in the present embodiment, since the normal MOSFETs possessing no reverse blocking ability and the normal diodes are combined, reduction in the costs for the components can be achieved.

In the foregoing, description has been given of the embodiments of the present invention. However, the embodiments of the present invention described in the foregoing are merely examples, and the scope of the present invention is not limited to the embodiments of the invention. The scope of the present invention is shown by the description of the claims, and includes any modification being equivalent to the meaning and in the scope of the description of the claims.

### INDUSTRIAL APPLICABILITY

In accordance with the power conversion device of the present invention, a power conversion device having no limitation on the voltage on each of the input side and the output side, being compact and involving a low loss, and being capable of charging a battery of an EV or the like by a general household AC power supply can be obtained. Further, by replacing the diodes of the bridge of the rectifying unit and the diodes of the voltage step-up unit by the switching elements, in addition to the function described above, it becomes possible to supply AC power from the battery to the home. Still further, though the function of supplying AC power from the battery to the general household is excluded, by providing the reverse blocking ability to the switching elements of the batch power-relay unit, the insulation of the level similarly to the case where a transformer is used can be obtained.

## Claims

1. A power conversion device mutually converting AC power and DC power, comprising:
a rectifying unit that rectifies an alternating current;
a voltage step-up/step-down unit that includes an element for correcting a power factor and that steps up or down a DC voltage from the rectifying unit;
a central capacitor that is charged by the DC voltage from the voltage step-up/step-down unit for discharging to an output section at a rear stage;
a first front-stage switching element that is serially arranged between a positive potential side of the voltage step-up/step-down unit and the positive potential side of the central capacitor;
a second front-stage switching element that is serially arranged between a ground side of the voltage step-up/step-down unit and the ground side of the central capacitor;
a first rear-stage switching element that is serially arranged between the positive potential side of the central capacitor and the positive potential side of the output section;
a second rear-stage switching element that is serially arranged between the ground side of the central capacitor and the ground side of the output section; and
a control unit that controls the voltage step-up/step-down unit, the first and second front-stage switching elements, and the first and second rear-stage switching elements.

2. The power conversion device according to Claim 1, wherein
the voltage step-up/step-down unit is structured with an inductor, a voltage step-up/step-down unit switching element, a voltage step-up/step-down unit diode, and a voltage step-up/step-down unit capacitor,
the voltage step-up/step-down unit diode is inserted on the positive potential side, and
the voltage step-up/step-down unit capacitor is arranged between the positive potential side and the ground side at a final stage of the voltage step-up/step-down unit.

3. The power conversion device according to Claim 2, wherein
in the voltage step-up/step-down unit, the voltage step-up/step-down unit switching element and the voltage step-up/step-down unit diode serially connected are serially inserted on the positive potential side, and
the inductor is arranged between the positive potential side and the ground side between the voltage step-up/step-down unit switching element and the voltage step-up/step-down unit diode.

4. The power conversion device according to Claim 2, wherein
in the voltage step-up/step-down unit, the inductor and the voltage step-up/step-down unit diode serially connected are serially inserted on the positive potential side, and
the voltage step-up/step-down unit switching element is arranged between the positive potential side and the ground side between the inductor and the voltage step-up/step-down unit diode.

5. The power conversion device according to any one of Claims 1 to 4, wherein
the voltage step-up/step-down unit capacitor is formed with a plurality of voltage step-up/step-down unit capacitors,
the first and/or the second front-stage switching element(s) is/are each formed with a plurality of switching elements,
the plurality of first front-stage switching elements are arranged between the positive potential side of the central capacitor and the positive potential side or the ground side of a predetermined one of the voltage step-up/step-down unit capacitors,
the plurality of second front-stage switching elements are arranged between the ground side of the central capacitor and the positive potential side or the ground side of a predetermined one of the voltage step-up/step-down unit capacitors, and
the control unit controls the switching elements so as to change an output voltage discharged from the central capacitor.

6. The power conversion device according to any one of Claims 1 to 4, wherein
the central capacitor is formed with a plurality of central capacitors,
the first and/or second front-stage switching element(s), and/or, the first and/or second rear-stage switching element(s) is/are each formed with a plurality of switching elements,
the plurality of first front-stage switching elements and/or the first rear-stage switching elements are arranged between the positive potential side and the positive potential side or the ground side of a predetermined one of the central capacitors,
the plurality of second front-stage switching elements and/or the second rear-stage switching elements are arranged between the ground side and the positive potential side or the ground side of the one of the central capacitors, and
the control unit controls the switching elements so as to change an output voltage discharged from the one of the central capacitors.

7. The power conversion device according to any one of Claims 1 to 4, further comprising:
an output section capacitor on an output side of the first and second rear-stage switching elements, wherein
the output section capacitor is formed with a plurality of output section capacitors,
the first and/or second rear-stage switching element(s) is/are each formed with a plurality of switching elements,
the plurality of first rear-stage switching elements are arranged between the positive potential side of the central capacitor and the positive potential side or the ground side of a predetermined one of the output section capacitors,
the plurality of second rear-stage switching elements are arranged between the ground side of the central capacitor and the positive potential side or the ground side of a predetermined voltage step-up/step-down unit capacitor (sic), and
the control unit controls the switching elements so as to change an output voltage discharged from the output section.

8. The power conversion device according to any one of Claims 1 to 7, further comprising:
a voltage monitoring unit that monitors a voltage of each of the first and second front-stage switching elements and the first and second rear-stage switching elements.

9. The power conversion device according to Claim 8, wherein
when the voltage across the switching elements is equal to or greater than a reference voltage, the control unit reduces a gate voltage or sets a gate voltage to zero, or a circuitry reduces a gate voltage or sets a gate voltage to zero.

10. The power conversion device according to any one of claims 1 to 9, wherein
the output section is provided with a sub-relay in parallel to a relay, an electric resistor being serially arranged in the sub-relay.

11. The power conversion device according to any one of Claims 1 to 10, wherein
the control unit controls the first and second front- and rear-stage switching elements, and the voltage step-up/step-down unit switching element, and,
the control unit increases an on-resistance of the first and second front-stage switching elements at start of use before the central capacitor is charged to a minimum output voltage of the voltage step-up/step-down unit.

12. The power conversion device according to any one of Claims 1 to 11, wherein
the control unit controls, upon activation, the voltage step-up/step-down unit switching element such that an output voltage of the voltage step-up/step-down unit is increased at an increase rate equal to or less than a predetermined value.

13. The power conversion device according to any one of claims 1 to 12, wherein
the control unit performs control such that, when DC power is generated from AC power and output from the output section, a voltage step-up/step-down output voltage Va from the voltage step-up/step-down unit is higher than a voltage Vb of the central capacitor.

14. The power conversion device according to any one of Claims 1 to 13, wherein
the first and second front-stage switching elements and the first and second rear-stage switching elements each have a reverse blocking ability.

15. The power conversion device according to any one of Claims 1 to 13, wherein
a reverse blocking diode is serially inserted in each of the first and second front-stage switching elements and the first and second rear-stage switching elements.

16. The power conversion device according to any one of Claims 2 to 14, wherein
a secondary battery is connected to the output section, and
the voltage step-up/step-down unit diode is replaced by a switching element, and four diodes forming a bridge in the rectifying unit are replaced by four switching elements, so as to obtain a compatible device that supplies AC power from the secondary battery to the AC power side.

17. The power conversion device according to Claim 16, wherein
a bidirectional switching element possessing a reverse blocking ability is employed as each of the first and second front-stage switching elements and the first and second rear-stage switching elements, in the compatible device that supplies AC power from the secondary battery to the AC power side.
